# EUROPEAN PATENT APPLICATION

(11) **EP 2 890 211 A1**
(43) Date of publication of application: **01.07.2015**
(21) Application number: 12884811.6
(22) Date of filing: 24.09.2012
(51) Int. Cl.: H04W 76/06

(54) **METHOD AND DEVICE FOR RELEASING COMMON E-DCH RESOURCES**

(71) Applicant: Huawei Technologies Co., Ltd., Longgang District Shenzhen, Guangdong 518129 (CN)
(72) Inventor: ZHENG, Xiaoxiao, Shenzhen Guangdong 518129 (CN); YANG, Xudong, Shenzhen Guangdong 518129 (CN); FENG, Li, Shenzhen Guangdong 518129 (CN)
(74) Representative: Goddar, Heinz J.
(86) International application number: PCT/CN2012/081830
(87) International publication number: WO 2014/043913

(57) **Abstract**

The present invention provides a method and a device for releasing a common E-DCH resource. According to one aspect of embodiments of the present invention, a base station receives time information of an implicit resource releasing timer sent by a base station controlling device, so that the base station releases or does not release, according to the time information of the implicit resource releasing timer, a common E-DCH resource occupied by a terminal. Because the base station no longer releases or does not release, only according to SI whose value is 0, the common E-DCH resource occupied by the terminal, a problem in the prior art that the terminal needs to compete again if there is data to be sent so as to obtain the common E-DCH resource because the base station improperly releases the E-DCH resource occupied by the terminal, can be avoided, thereby reducing delay in sending the data.

## Description

### TECHNICAL FIELD

The present invention relates to communications technologies, and in particular, to a method and a device for releasing a common enhanced dedicated channel (Enhanced Dedicated CHannel, E-DCH for short) resource.

### BACKGROUND

In a radio communications system, for example, a universal mobile telecommunications system (Universal Mobile Telecommunication System, UMTS for short), after a terminal obtains a common enhanced dedicated channel (Enhanced Dedicated CHannel, E-DCH for short) resource upon competition, the terminal and a NodeB (NodeB) may release the commonE-DCH resource occupied by the terminal in an implicit resource releasing manner. Specifically, when an implicit resource releasing timer expires, the terminal sends scheduling information (Scheduling Information, SI) whose value is 0 to the NodeB to release the E-DCH resource occupied by the terminal. The NodeB receives the SI whose value is 0 and releases the E-DCH resource occupied by the terminal.

However, the terminal may also send SI whose value is 0 to the NodeB in other cases, for example, sending of the SI is periodically triggered and there is no data to be sent in a buffer of the terminal, and therefore the NodeB may improperly release the E-DCH resource occupied by the terminal, and the terminal needs to compete again if data needs to be sent subsequently so as to obtain a common E-DCH resource, thereby increasing delay in sending the data. A similar problem also exists in other radio communications systems.

### SUMMARY

Multiple aspects of the present invention provide a method and a device for releasing a common E-DCH resource so as to reduce delay in sending data.

One aspect of the present invention provides a method for releasing a common E-DCH resource, including:
receiving, by a base station, time information of an implicit resource releasing timer sent by a base station controlling device; and
releasing or not releasing, by the base station according to the time information of the implicit resource releasing timer, a common E-DCH resource occupied by a terminal.

According to the preceding aspect and any possible implementation manner, an implementation manner is further provided, and the time information of the implicit resource releasing timer includes:
a value of the implicit resource releasing timer; or
an indication used to indicate that the value of the implicit resource releasing timer is 0 or greater than 0.

According to the preceding aspect and any possible implementation manner, an implementation manner is further provided, and the releasing or not releasing, by the base station according to the time information of the implicit resource releasing timer, a common E-DCH resource occupied by a terminal includes:
if a value indicated by the time information of the implicit resource releasing timer is 0, releasing, by the base station, the common E-DCH resource occupied by the terminal; or
if a value indicated by the time information of the implicit resource releasing timer is greater than 0, not releasing, by the base station, the common E-DCH resource occupied by the terminal.

According to the preceding aspect and any possible implementation manner, an implementation manner is further provided, and the releasing or not releasing, by the base station according to the time information of the implicit resource releasing timer, a common E-DCH resource occupied by a terminal further includes:
receiving, by the base station, a MAC-I PDU sent by the terminal, where payload of the MAC-I PDU includes DCCH/DTCH data and SI that carries empty buffer status.

Another aspect of the present invention provides a method for releasing a common E-DCH resource, including:
determining, by a base station controlling device, time information of an implicit resource releasing timer; and
sending, by the base station controlling device, the time information of the implicit resource releasing timer to a base station, so that the base station releases or does not release, according to the time information of the implicit resource releasing timer, a common E-DCH resource occupied by a terminal.

According to the preceding aspect and any possible implementation manner, an implementation manner is further provided, and the time information of the implicit resource releasing timer includes:
a value of the implicit resource releasing timer; or
an indication used to indicate that the value of the implicit resource releasing timer is 0 or greater than 0.

According to the preceding aspect and any possible implementation manner, an implementation manner is further provided, where:
if a value indicated by the time information of the implicit resource releasing timer is 0, this instructs the base station to release the common E-DCH resource occupied by the terminal; or
if a value indicated by the time information of the implicit resource releasing timer is greater than 0, this instructs the base station not to release the common E-DCH resource occupied by the terminal.

Another aspect of the present invention provides a method for releasing a common E-DCH resource, including:
receiving, by a base station, a MAC-I PDU sent by a terminal, where the MAC-I PDU includes, in a first manner or a second manner, SI that carries empty buffer status, the first manner is that payload of the MAC-I PDU includes only the SI, and the second manner is that payload of the MAC-I PDU includes DCCH/DTCH data and the SI; and
releasing or not releasing, by the base station according to the manner in which the SI is included in the payload of the MAC-I PDU, a common E-DCH resource occupied by the terminal.

According to the preceding aspect and any possible implementation manner, an implementation manner is further provided, and the releasing or not releasing, by the base station according to the manner in which the SI is included in the payload of the MAC-I PDU, a common E-DCH resource occupied by the terminal includes:
if the manner is the first manner, releasing, by the base station, the common E-DCH resource occupied by the terminal; or
if the manner is the second manner, not releasing, by the base station, the common E-DCH resource occupied by the terminal.

Another aspect of the present invention provides a method for releasing a common E-DCH resource, including:
receiving, by a terminal, a value of an implicit resource releasing timer, where the value is set by a base station controlling device; and
if the value of the implicit resource releasing timer is 0 and there is no data to be sent in a buffer of the terminal, sending, by the terminal, a MAC-I PDU to a base station, where the MAC-I PDU includes, in a first manner, SI that carries empty buffer status, and the first manner is that payload of the MAC-I PDU includes only the SI, so that the base station releases or does not release, according to the manner in which the SI is included in the payload of the MAC-I PDU, a common E-DCH resource occupied by the terminal.

According to the preceding aspect and any possible implementation manner, an implementation manner is further provided, and the sending, by the terminal, a MAC-I PDU to a base station, where the MAC-I PDU includes, in a first manner, SI that carries empty buffer status, includes:
if another MAC-I PDU that bears DCCH/DTCH data includes a first free space, and a size of the first free space is larger than or equal to that of the SI, sending, by the terminal, the another MAC-I PDU to the base station, where payload of the another MAC-I PDU includes the DCCH/DTCH data and the SI; and sending the MAC-I PDU to the base station; or
if another MAC-I PDU that bears DCCH/DTCH data does not include a free space or includes a second free space, and a size of the second free space is smaller than that of the SI, sending, by the terminal, the another MAC-I PDU to the base station, where payload of the another MAC-I PDU includes the DCCH/DTCH data; and sending the MAC-I PDU to the base station.

According to the preceding aspect and any possible implementation manner, an implementation manner is further provided, and the method further includes:
if the value of the implicit resource releasing timer is not 0, there is no data to be sent in the buffer of the terminal, and the implicit resource timer is operating, not sending, by the terminal, the MAC-I PDU to the base station.

According to the preceding aspect and any possible implementation manner, an implementation manner is further provided, and the method further includes:
if the value of the implicit resource releasing timer is not 0, there is no data to be sent in the buffer of the terminal, and the implicit resource timer expires, sending, by the terminal, the MAC-I PDU to the base station.

According to the preceding aspect and any possible implementation manner, an implementation manner is further provided, where:
if the manner is the first manner, this instructs the base station to release the common E-DCH resource occupied by the terminal; or
if the manner is the second manner, this instructs the base station not to release the common E-DCH resource occupied by the terminal.

Another aspect of the present invention provides a base station, including:
a receiving unit, configured to receive time information of an implicit resource releasing timer sent by a base station controlling device and transmit the time information of the implicit resource releasing timer to an executing unit; and
the executing unit, configured to release or not release, according to the time information of the implicit resource releasing timer, a common E-DCH resource occupied by a terminal.

According to the preceding aspect and any possible implementation manner, an implementation manner is further provided, and the time information of the implicit resource releasing timer received by the receiving unit includes:
a value of the implicit resource releasing timer; or
an indication used to indicate that the value of the implicit resource releasing timer is 0 or greater than 0.

According to the preceding aspect and any possible implementation manner, an implementation manner is further provided, and the executing unit is specifically configured to:
if a value indicated by the time information of the implicit resource releasing timer is 0, release the common E-DCH resource occupied by the terminal; or
if a value indicated by the time information of the implicit resource releasing timer is greater than 0, not release the common E-DCH resource occupied by the terminal.

According to the preceding aspect and any possible implementation manner, an implementation manner is further provided, and the receiving unit is specifically configured to:
receive a MAC-I PDU sent by the terminal, where payload of the MAC-I PDU includes DCCH/DTCH data and SI that carries empty buffer status.

Another aspect of the present invention provides a base station controlling device, including:
a determining unit, configured to determine time information of an implicit resource releasing timer and transmit the time information of the implicit resource releasing timer to a sending unit; and
the sending unit, configured to send the time information of the implicit resource releasing timer to a base station, so that the base station releases or does not release, according to the time information of the implicit resource releasing timer, a common E-DCH resource occupied by a terminal.

According to the preceding aspect and any possible implementation manner, an implementation manner is further provided, and the time information of the implicit resource releasing timer determined by the determining unit includes:
a value of the implicit resource releasing timer; or
an indication used to indicate that the value of the implicit resource releasing timer is 0 or greater than 0.

According to the preceding aspect and any possible implementation manner, an implementation manner is further provided, where:
if a value indicated by the time information of the implicit resource releasing timer is 0, this instructs the base station to release the common E-DCH resource occupied by the terminal; or
if a value indicated by the time information of the implicit resource releasing timer is greater than 0, this instructs the base station not to release the common E-DCH resource occupied by the terminal.

Another aspect of the present invention provides a base station, including:
a receiving unit, configured to receive a MAC-I PDU sent by a terminal and transmit the MAC-I PDU to an executing unit, where the MAC-I PDU includes, in a first manner or a second manner, SI that carries empty buffer status, the first manner is that payload of the MAC-I PDU includes only the SI, and the second manner is that payload of the MAC-I PDU includes DCCH/ DTCH data and the SI; and
the executing unit, configured to release or not release, according to the manner in which the SI is included in the payload of the MAC-I PDU, a common E-DCH resource occupied by the terminal.

According to the preceding aspect and any possible implementation manner, an implementation manner is further provided, and the executing unit is specifically configured to:
if the manner is the first manner, release the common E-DCH resource occupied by the terminal; or
if the manner is the second manner, not release the common E-DCH resource occupied by the terminal.

Another aspect of the present invention provides a terminal, including:
a receiving unit, configured to receive a value of an implicit resource releasing timer and transmit the value of the implicit resource releasing timer to a sending unit, where the value is set by a base station controlling device; and
the sending unit, configured to, if the value of the implicit resource releasing timer is 0 and there is no data to be sent in a buffer of the terminal, send a MAC-I PDU to a base station, where the MAC-I PDU includes, in a first manner, SI that carries empty buffer status, and the first manner is that payload of the MAC-I PDU includes only the SI, so that the base station releases or does not release, according to the manner in which the SI is included in the payload of the MAC-I PDU, a common E-DCH resource occupied by the terminal.

According to the preceding aspect and any possible implementation manner, an implementation manner is further provided, and the sending unit is specifically configured to:
if another MAC-I PDU that bears DCCH/DTCH data includes a first free space, and a size of the first free space is larger than or equal to that of the SI, send the another MAC-I PDU to the base station, where payload of the another MAC-I PDU includes the DCCH/DTCH data and the SI; and send the MAC-I PDU to the base station; or
if another MAC-I PDU that bears DCCH/DTCH data does not include a free space or includes a second free space, and a size of the second free space is smaller than that of the SI, send the another MAC-I PDU to the base station, where payload of the another MAC-I PDU includes the DCCH/DTCH data; and send the MAC-I PDU to the base station.

According to the preceding aspect and any possible implementation manner, an implementation manner is further provided, and the sending unit is further configured to:
if the value of the implicit resource releasing timer is not 0, there is no data to be sent in the buffer of the terminal, and the implicit resource timer is operating, not send the MAC-I PDU to the base station.

According to the preceding aspect and any possible implementation manner, an implementation manner is further provided, and the sending unit is further configured to:
if the value of the implicit resource releasing timer is not 0, there is no data to be sent in the buffer of the terminal, and the implicit resource timer expires, send the MAC-I PDU to the base station.

According to the preceding aspect and any possible implementation manner, an implementation manner is further provided, where:
if the manner is the first manner, this instructs the base station to release the common E-DCH resource occupied by the terminal; or
if the manner is the second manner, this instructs the base station not to release the common E-DCH resource occupied by the terminal.

Another aspect of the present invention provides a base station, including:
a receiver, configured to receive time information of an implicit resource releasing timer sent by a base station controlling device and transmit the time information of the implicit resource releasing timer to a processor; and
the processor, configured to release or not release, according to the time information of the implicit resource releasing timer, a common E-DCH resource occupied by a terminal.

According to the preceding aspect and any possible implementation manner, an implementation manner is further provided, and the time information of the implicit resource releasing timer received by the receiver includes:
a value of the implicit resource releasing timer; or
an indication used to indicate that the value of the implicit resource releasing timer is 0 or greater than 0.

According to the preceding aspect and any possible implementation manner, an implementation manner is further provided, and the processor is specifically configured to:
if a value indicated by the time information of the implicit resource releasing timer is 0, release the common E-DCH resource occupied by the terminal; or
if a value indicated by the time information of the implicit resource releasing timer is greater than 0, not release the common E-DCH resource occupied by the terminal.

According to the preceding aspect and any possible implementation manner, an implementation manner is further provided, and the receiver is further configured to:
receive a MAC-I PDU sent by the terminal, where payload of the MAC-I PDU includes DCCH/DTCH data and SI that carries empty buffer status.

Another aspect of the present invention provides a base station controlling device, including:
a processor, configured to determine time information of an implicit resource releasing timer and transmit the time information of the implicit resource releasing timer to a transmitter; and
the transmitter, configured to send the time information of the implicit resource releasing timer to a base station, so that the base station releases or does not release, according to the time information of the implicit resource releasing timer, a common E-DCH resource occupied by a terminal.

According to the preceding aspect and any possible implementation manner, an implementation manner is further provided, and the time information of the implicit resource releasing timer determined by the processor includes:
a value of the implicit resource releasing timer; or
an indication used to indicate that the value of the implicit resource releasing timer is 0 or greater than 0.

According to the preceding aspect and any possible implementation manner, an implementation manner is further provided, where:
if a value indicated by the time information of the implicit resource releasing timer is 0, this instructs the base station to release the common E-DCH resource occupied by the terminal; or
if a value indicated by the time information of the implicit resource releasing timer is greater than 0, this instructs the base station not to release the common E-DCH resource occupied by the terminal.

Another aspect of the present invention provides a base station, including:
a receiver, configured to receive a MAC-I PDU sent by a terminal and transmit the MAC-I PDU to a processor, where the MAC-I PDU includes, in a first manner or a second manner, SI that carries empty buffer status, the first manner is that payload of the MAC-I PDU includes only the SI, and the second manner is that payload of the MAC-I PDU includes DCCH/ DTCH data and the SI; and
the processor, configured to release or not release, according to the manner in which the SI is included in the payload of the MAC-I PDU, a common E-DCH resource occupied by the terminal.

According to the preceding aspect and any possible implementation manner, an implementation manner is further provided, and the processor is specifically configured to:
if the manner is the first manner, release the common E-DCH resource occupied by the terminal; or
if the manner is the second manner, not release the common E-DCH resource occupied by the terminal.

Another aspect of the present invention provides a terminal, including:
a receiver, configured to receive a value of an implicit resource releasing timer and transmit the value of the implicit resource releasing timer to a transmitter, where the value is set by a base station controlling device; and
the transmitter, configured to, if the value of the implicit resource releasing timer is 0 and there is no data to be sent in a buffer of the terminal, send a MAC-I PDU to a base station, where the MAC-I PDU includes, in a first manner, SI that carries empty buffer status, and the first manner is that payload of the MAC-I PDU includes only the SI, so that the base station releases or does not release, according to the manner in which the SI is included in the payload of the MAC-I PDU, a common E-DCH resource occupied by the terminal.

According to the preceding aspect and any possible implementation manner, an implementation manner is further provided, and the transmitter is specifically configured to:
if another MAC-I PDU that bears DCCH/DTCH data includes a first free space, and a size of the first free space is larger than or equal to that of the SI, send the another MAC-I PDU to the base station, where payload of the another MAC-I PDU includes the DCCH/DTCH data and the SI; and send the MAC-I PDU to the base station; or
if another MAC-I PDU that bears DCCH/DTCH data does not include a free space or includes a second free space, and a size of the second free space is smaller than that of the SI, send the another MAC-I PDU to the base station, where payload of the another MAC-I PDU includes the DCCH/DTCH data; and send the MAC-I PDU to the base station.

According to the preceding aspect and any possible implementation manner, an implementation manner is further provided, and the transmitter is further configured to:
if the value of the implicit resource releasing timer is not 0, there is no data to be sent in the buffer of the terminal, and the implicit resource timer is operating, not send the MAC-I PDU to the base station.

According to the preceding aspect and any possible implementation manner, an implementation manner is further provided, and the transmitter is further configured to:
if the value of the implicit resource releasing timer is not 0, there is no data to be sent in the buffer of the terminal, and the implicit resource timer expires, send the MAC-I PDU to the base station.

According to the preceding aspect and any possible implementation manner, an implementation manner is further provided, where:
if the manner is the first manner, this instructs the base station to release the common E-DCH resource occupied by the terminal; or
if the manner is the second manner, this instructs the base station not to release the common E-DCH resource occupied by the terminal.

It can be seen from the preceding technical solutions that according to one aspect of embodiments of the present invention, a base station receives time information of an implicit resource releasing timer sent by a base station controlling device, so that the base station releases or does not release, according to the time information of the implicit resource releasing timer, a common E-DCH resource occupied by a terminal. Because the base station no longer releases or does not release, only according to SI whose value is 0, the common E-DCH resource occupied by the terminal, a problem in the prior art that the terminal needs to compete again if there is data to be sent so as to obtain a common E-DCH resource because the base station improperly releases the E-DCH resource occupied by the terminal, can be avoided, thereby reducing delay in sending the data.

It can be seen from the preceding technical solutions that according to another aspect of the embodiments of the present invention, a base station receives a MAC-I PDU sent by a terminal, where the MAC-I PDU includes, in a first manner or a second manner, SI that carries empty buffer status, the first manner is that payload of the MAC-I PDU includes only the SI, and the second manner is that payload of the MAC-I PDU includes DCCH/DTCH data and the SI, so that the base station releases or does not release, according to the manner in which the SI is included in the payload of the MAC-I PDU, a common E-DCH resource occupied by the terminal. Because the base station no longer releases or does not release, only according to SI whose value is 0, the common E-DCH resource occupied by the terminal, a problem in the prior art that the terminal needs to compete again if there is data to be sent so as to obtain the common E-DCH resource because the base station improperly releases the E-DCH resource occupied by the terminal, can be avoided, thereby reducing delay in sending the data.

### BRIEF DESCRIPTION OF DRAWINGS

To illustrate the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic flowchart of a method for releasing a common E-DCH resource according to an embodiment of the present invention;
FIG. 2 is a schematic flowchart of a method for releasing a common E-DCH resource according to another embodiment of the present invention;
FIG. 3 is a schematic flowchart of a method for releasing a common E-DCH resource according to another embodiment of the present invention;
FIG. 4 is a schematic flowchart of a method for releasing a common E-DCH resource according to another embodiment of the present invention;
FIG. 5 is a schematic structural diagram of a base station according to an embodiment of the present invention;
FIG. 6 is a schematic structural diagram of a base station controlling device according to another embodiment of the present invention;
FIG. 7 is a schematic structural diagram of a base station according to another embodiment of the present invention;
FIG. 8 is a schematic structural diagram of a terminal according to another embodiment of the present invention;
FIG. 9 is a schematic structural diagram of a base station according to another embodiment of the present invention;
FIG. 10 is a schematic structural diagram of a base station controlling device according to another embodiment of the present invention;
FIG. 11 is a schematic structural diagram of a base station according to another embodiment of the present invention; and
FIG. 12 is a schematic structural diagram of a terminal according to another embodiment of the present invention.

### DESCRIPTION OF EMBODIMENTS

To make the objectives, technical solutions, and advantages of the embodiments of the present invention more comprehensible, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

Technical solutions in the present invention may apply to various communications systems, such as a global system for mobile communications (Global System for Mobile Communications, GSM for short), a general packet radio service (General Packet Radio Service, GPRS for short) system, a code division multiple access (Code Division Multiple Access, CDMA for short) system, a CDMA2000 system, a wideband code division multiple access (Wideband Code Division Multiple Access, WCDMA for short) system, and the like.

A base station may be a network element, for example, a base transceiver station (Base Transceiver Station, BTS for short) in a GSM system, a GPRS system, or a CDMA system, or a NodeB (NodeB) in a CDMA2000 system or a WCDMA system.

A base station controlling device may be a network element, for example, a base station controller (Base Station Controller, BSC for short) in a GSM system, a GPRS system, or a CDMA system, or a radio network controller (Radio Network Controller, RNC for short) in a CDMA2000 system or in a WCDMA system.

In addition, the term "and/or" in the specification describes only an association between associated objects and represents that three relationships may exist. For example, A and/or B may represent the following three cases: only A exists, both A and B exist, and only B exists. In addition, a character "/" in the specification generally indicates an "or" relationship between a former associated object and a latter one.

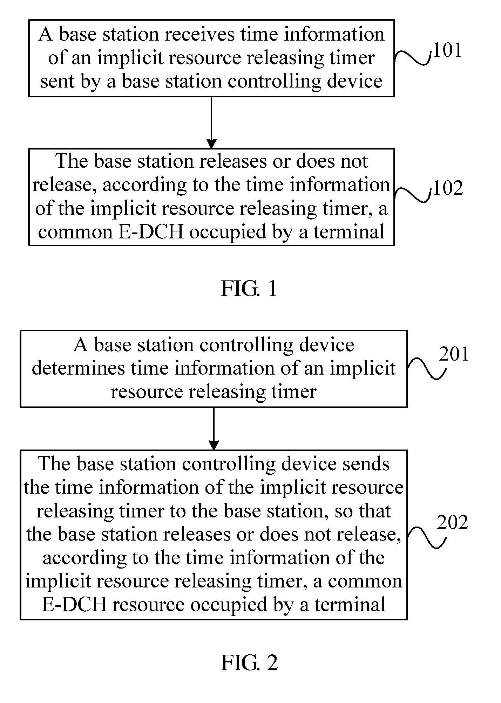

FIG. 1 is a schematic flowchart of a method for releasing a common E-DCH resource according to an embodiment of the present invention. As shown in FIG. 1:
101. A base station receives time information of an implicit resource releasing timer sent by a base station controlling device.
102. The base station releases or does not release, according to the time information of the implicit resource releasing timer, a common E-DCH resource occupied by a terminal.

Alternatively, in a possible implementation manner of this embodiment, in 101, the base station may specifically receive the time information of the implicit resource releasing timer sent by the base station controlling device through a physical shared channel reconfiguration request (PHYSICAL SHARED CHANNEL RECONFIGURATION REQUEST) message.

Alternatively, in a possible implementation manner of this embodiment, the time information of the implicit resource releasing timer may be a value of the implicit resource releasing timer. For example, the base station may receive one of enumerated (Enumerated) values sent by the base station controlling device, and the Enumerated values are 10, 20, 30, 40, 80, 160, 320, and 800 milliseconds (ms).

Alternatively, in a possible implementation manner of this embodiment, the time information of the implicit resource releasing timer may also be an indication used to indicate that the value of the implicit resource releasing timer is 0 or greater than 0. For example, 1 indicates that the value of the implicit resource releasing timer is 0, and 0 indicates that the value of the implicit resource releasing timer is greater than 0. For another example, a value True (True) indicates that the value of the implicit resource releasing timer is 0, and a value False (False) indicates that the value of the implicit resource releasing timer is greater than 0.

Alternatively, in a possible implementation manner of this embodiment, in 103, if a value indicated by the time information of the implicit resource releasing timer is 0, the base station may release the common E-DCH resource occupied by the terminal.

Alternatively, in a possible implementation manner of this embodiment, in 103, if a value indicated by the time information of the implicit resource releasing timer is greater than 0, the base station may not release the common E-DCH resource occupied by the terminal.

Alternatively, in a possible implementation manner of this embodiment, before 103, the base station may further receive a media access control (Media Access Control, MAC for short)-I protocol data unit (Protocol Data Unit, PDU) sent by the terminal, where payload of the MAC-I PDU includes dedicated control channel (Dedicated Control Channel, DCCH)/dedicated traffic channel (Dedicated Traffic Channel, DTCH) data and SI that carries empty buffer status. The SI that carries empty buffer status, that is, SI = 0, indicates that there is no data to be sent in a buffer of the terminal. The buffer status is used to indicate the amount of data to be sent in the buffer of the terminal, and the empty is used to indicate that there is no data to be sent, except for that included in the last MAC-I PDU, in the buffer of the terminal.

Correspondingly, if the value indicated by the time information of the implicit resource releasing timer is greater than 0, the base station may determine that the SI = 0 is not triggered by expiration of the implicit resource releasing timer but is triggered by another case. For example, it may be triggered by periodic reporting of the SI or act as trailing bits in the MAC-I PDU. Therefore, the base station may not release the common E-DCH resource occupied by the terminal.

In this embodiment, a base station receives time information of an implicit resource releasing timer sent by a base station controlling device, so that the base station releases or does not release, according to the time information of the implicit resource releasing timer, a common E-DCH resource occupied by a terminal. Because the base station no longer releases or does not release, only according to SI whose value is 0, the common E-DCH resource occupied by the terminal, a problem in the prior art that the terminal needs to compete again if there is data to be sent so as to obtain the common E-DCH resource because the base station improperly releases the E-DCH resource occupied by the terminal, can be avoided, thereby reducing delay in sending the data.

FIG. 2 is a schematic flowchart of a method for releasing a common E-DCH resource according to another embodiment of the present invention. As shown in FIG. 2:
201. A base station controlling device determines time information of an implicit resource releasing timer.
202. The base station controlling device sends the time information of the implicit resource releasing timer to a base station, so that the base station releases or does not release, according to the time information of the implicit resource releasing timer, a common E-DCH resource occupied by a terminal.

Specifically, in 201, the base station controlling device may determine the time information of the implicit resource releasing timer according to a service feature of the terminal in cell_forward link access channel (CELL_Forward Link Access Channel, CELL_FACH) state. For example, if the amount of service data of the terminal in CELL_FACH state is relatively large, the base station controlling device may set a value of the implicit resource releasing timer to a relatively long time.

Specifically, in 201, the base station controlling device may also determine the time information of the implicit resource releasing timer according to congestion status of the common E-DCH resource. For example, if the common E-DCH resource is in congestion state, the base station controlling device may set the value of the implicit resource releasing timer to a relatively short time.

Alternatively, in a possible implementation manner of this embodiment, the time information of the implicit resource releasing timer may be the value of the implicit resource releasing timer. For example, the base station controlling device may determine one of enumerated (Enumerated) values, and the Enumerated values are 10, 20, 30, 40, 80, 160, 320, and 800 milliseconds (ms).

Alternatively, in a possible implementation manner of this embodiment, the time information of the implicit resource releasing timer may also be an indication used to indicate that the value of the implicit resource releasing timer is 0 or greater than 0. For example, 1 indicates that the value of the implicit resource releasing timer is 0, and 0 indicates that the value of the implicit resource releasing timer is greater than 0. For another example, a value True (True) indicates that the value of the implicit resource releasing timer is 0, and a value False (False) indicates that the value of the implicit resource releasing timer is greater than 0.

Alternatively, in a possible implementation manner of this embodiment, in 202, the base station controlling device may specifically send the time information of the implicit resource releasing timer to the base station through a physical shared channel reconfiguration request (physical shared channel reconfiguration request) message.

Alternatively, in a possible implementation manner of this embodiment, the base station receives a media access control (Media Access Control, MAC for short)-I protocol data unit (Protocol Data Unit, PDU) sent by the terminal, where payload of the MAC-I PDU includes dedicated control channel (Dedicated Control Channel, DCCH)/dedicated traffic channel (Dedicated Traffic Channel, DTCH) data and SI that carries empty buffer status. If the value indicated by the time information of the implicit resource releasing timer is 0, the base station may release the common E-DCH resource occupied by the terminal.

Alternatively, in a possible implementation manner of this embodiment, the base station receives a media access control (Media Access Control, MAC for short)-I protocol data unit (Protocol Data Unit, PDU) sent by the terminal, where payload of the MAC-I PDU includes dedicated control channel (Dedicated Control Channel, DCCH)/dedicated traffic channel (Dedicated Traffic Channel, DTCH) data and SI that carries empty buffer status. If the value indicated by the time information of the implicit resource releasing timer is greater than 0, the base station may not release the common E-DCH resource occupied by the terminal.

The SI that carries empty buffer status, that is, SI = 0, indicates that there is no data to be sent in a buffer of the terminal. The buffer status is used to indicate the amount of data to be sent in the buffer of the terminal, and the empty is used to indicate that there is no data to be sent, except for that included in the last MAC-I PDU, in the buffer of the terminal.

Correspondingly, if the value indicated by the time information of the implicit resource releasing timer is greater than 0, the base station may determine that the SI = 0 is not triggered by expiration of the implicit resource releasing timer but is triggered by another case. For example, it may be triggered by a mechanism for triggering periodical reporting of the SI or generated as trailing bits in the MAC-I PDU. Therefore, the base station may not release the common E-DCH resource occupied by the terminal.

In this embodiment, a base station controlling device determines time information of an implicit resource releasing timer, so that the base station controlling device sends the time information of the implicit resource releasing timer to the base station, and the base station releases or does not release, according to the time information of the implicit resource releasing timer, a common E-DCH resource occupied by a terminal. Because the base station no longer releases, only according to SI whose value is 0, the common E-DCH resource occupied by the terminal, a problem in the prior art that the terminal needs to compete again if there is data to be sent so as to obtain the common E-DCH resource because the base station improperly releases the E-DCH resource occupied by the terminal, can be avoided, thereby reducing delay in sending the data.

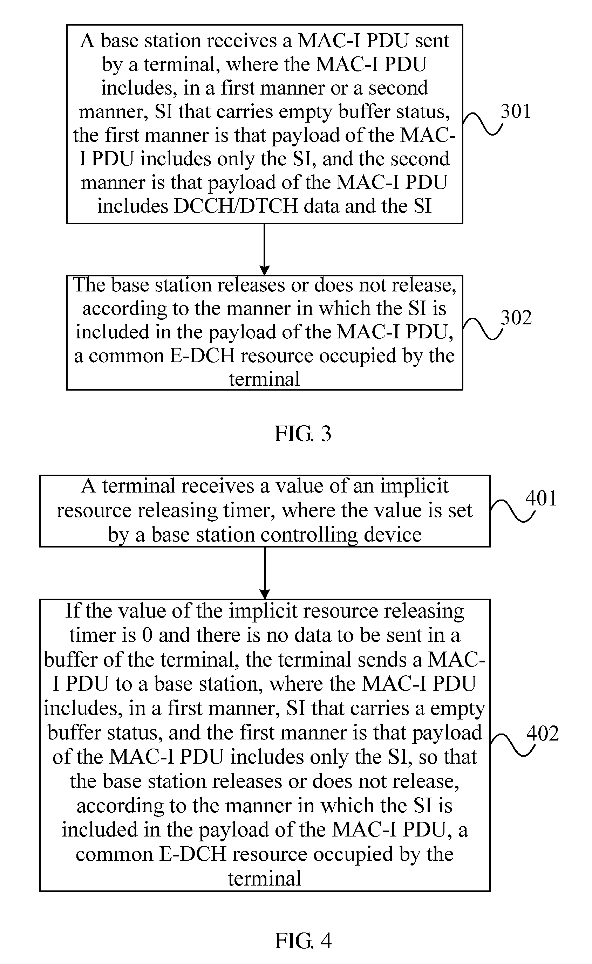

FIG. 3 is a schematic flowchart of a method for releasing a common E-DCH resource according to another embodiment of the present invention. As shown in FIG. 3:
301. A base station receives a MAC-I PDU sent by a terminal, where the MAC-I PDU includes, in a first manner or a second manner, SI that carries empty buffer status, the first manner is that payload of the MAC-I PDU includes only the SI, and the second manner is that payload of the MAC-I PDU includes DCCH/DTCH data and the SI.
302. The base station releases or does not release, according to the manner in which the SI is included in the payload of the MAC-I PDU, a common E-DCH resource occupied by the terminal.

The SI that carries empty buffer status, that is, SI = 0, indicates that there is no data to be sent in a buffer of the terminal. The buffer status is used to indicate the amount of data to be sent in the buffer of the terminal, and the empty is used to indicate that there is no data to be sent, except for that included in the last MAC-I PDU, in the buffer of the terminal.

Alternatively, in a possible implementation manner of this embodiment, in 302, if the manner is the first manner, the base station may release the common E-DCH resource occupied by the terminal.

Alternatively, in a possible implementation manner of this embodiment, in 302, if the manner is the second manner, the base station may not release the common E-DCH resource occupied by the terminal.

In this embodiment, a base station receives a MAC-I PDU sent by a terminal, where the MAC-I PDU includes, in a first manner or a second manner, SI that carries empty buffer status, the first manner is that payload of the MAC-I PDU includes only the SI, and the second manner is that payload of the MAC-I PDU includes DCCH/DTCH data and the SI, so that the base station releases or does not release, according to the manner in which the SI is included in the payload of the MAC-I PDU, a common E-DCH resource occupied by the terminal. Because the base station no longer releases or does not release, only according to SI whose value is 0, the common E-DCH resource occupied by the terminal, a problem in the prior art that the terminal needs to compete again if there is data to be sent so as to obtain the common E-DCH resource because the base station improperly releases the E-DCH resource occupied by the terminal, can be avoided, thereby reducing delay in sending the data.

FIG. 4 is a schematic flowchart of a method for releasing a common E-DCH resource according to another embodiment of the present invention. As shown in FIG. 4:
401. A terminal receives a value of an implicit resource releasing timer, where the value is set by a base station controlling device.
402. If the value of the implicit resource releasing timer is 0 and there is no data to be sent in a buffer of the terminal, the terminal sends a MAC-I PDU to a base station, where the MAC-I PDU includes, in a first manner, SI that carries empty buffer status, and the first manner is that payload of the MAC-I PDU includes only the SI, so that the base station releases or does not release, according to the manner in which the SI is included in the payload of the MAC-I PDU, a common E-DCH resource occupied by the terminal.

The SI that carries empty buffer status, that is, SI = 0, indicates that there is no data to be sent in the buffer of the terminal. The buffer status is used to indicate the amount of data to be sent in the buffer of the terminal, and the empty is used to indicate that there is no data to be sent, except for that included in the last MAC-I PDU, in the buffer of the terminal. That there is no data to be sent in the buffer of the terminal means that Total E-DCH buffer status (Total E-DCH Buffer Status, TEBS) = 0 and there is no data to be sent at a MAC layer after the last MAC-I PDU that includes DCCH/DTCH data is sent, where the TEBS is used to indicate the number of bytes to be transmitted or retransmitted at a radio link control (Radio Link Control, RLC) layer.

Alternatively, in a possible implementation manner of this embodiment, if the manner is the first manner, the base station may release the common E-DCH resource occupied by the terminal.

Alternatively, in a possible implementation manner of this embodiment, if the manner is the second manner, the base station may not release the common E-DCH resource occupied by the terminal.

Alternatively, in a possible implementation manner of this embodiment, in 402, if another MAC-I PDU that bears the DCCH/DTCH data includes a first free space, and a size of the first free space is larger than or equal to that of the SI, the terminal may send the another MAC-I PDU to the base station, where payload of the another MAC-I PDU includes the DCCH/DTCH data and the SI; and then, the terminal may further send the MAC-I PDU to the base station.

Alternatively, in a possible implementation manner of this embodiment, in 402, if another MAC-I PDU that bears the DCCH/DTCH data does not include a free space or includes a second free space, and a size of the second free space is smaller than that of the SI, the terminal may send the another MAC-I PDU to the base station, where payload of the another MAC-I PDU includes the DCCH/DTCH data; and then, the terminal may further send the MAC-I PDU to the base station.

It should be noted that sufficient space in the another MAC-I PDU means that there is still sufficient space in the another MAC-I PDU to bear the SI other than the DCCH/DTCH data. For example, the SI occupies 18 bits (bit); in this case, sufficient space in the another MAC-I PDU may indicate that there is at least an 18-bit remaining space in the another MAC-I PDU other than a space for bearing the DCCH/DTCH data.

Alternatively, in a possible implementation manner of this embodiment, if the value of the implicit resource releasing timer is not 0, there is no data to be sent in the buffer of the terminal, and the implicit resource timer is operating, the terminal is forbidden from sending the MAC-I PDU; that is, the terminal no longer sends the MAC-I PDU.

Further alternatively, if the value of the implicit resource releasing timer is not 0, there is no data to be sent in the buffer of the terminal, and the implicit resource timer expires, the terminal may send the MAC-I PDU.

In this embodiment, a terminal receives a value of an implicit resource releasing timer, where the value is set by a base station controlling device, and if the value of the implicit resource releasing timer is 0 and there is no data to be sent in a buffer of the terminal, the terminal sends a MAC-I PDU to a base station, where the MAC-I PDU includes, in a first manner, SI that carries empty buffer status and the first manner is that payload of the MAC-I PDU includes only the SI, so that the base station releases or does not release, according to the manner in which the SI is included in the payload of the MAC-I PDU, a common E-DCH resource occupied by the terminal. Because the base station no longer releases or does not release, only according to SI whose value is 0, the common E-DCH resource occupied by the terminal, a problem in the prior art that the terminal needs to compete again if there is data to be sent so as to obtain the common E-DCH resource because the base station improperly releases the E-DCH resource occupied by the terminal, can be avoided, thereby reducing delay in sending the data.

It should be noted that, for brevity, the foregoing method embodiments are represented as a series of actions. However, a person skilled in the art should understand that the present invention is not limited to the order of the described actions, because according to the present invention, some steps may adopt other orders or be performed simultaneously. It should be further understood by a person skilled in the art that the described embodiments all belong to exemplary embodiments, and the involved actions and modules are not necessarily required by the present invention.

In the foregoing embodiments, the description of each of the embodiments has respective focuses. For a part that is not described in detail in a certain embodiment, reference may be made to related descriptions in other embodiments.

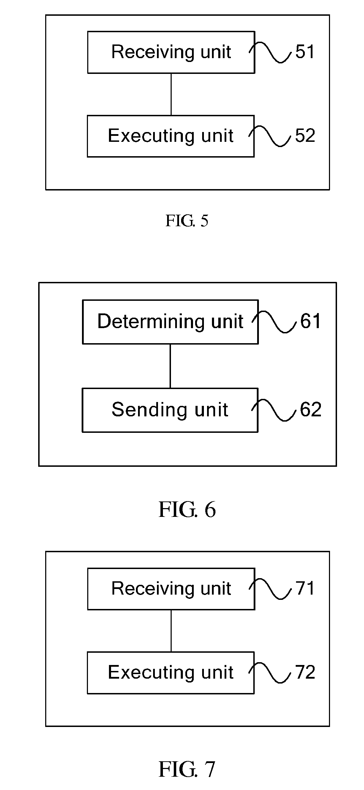

FIG. 5 is a schematic structural diagram of a base station according to another embodiment of the present invention. As shown in FIG. 5, the base station in this embodiment may include a receiving unit 51 and an executing unit 52. The receiving unit 51 is configured to receive time information of an implicit resource releasing timer sent by a base station controlling device and transmit the time information of the implicit resource releasing timer to the executing unit 52. The executing unit 52 is configured to release or not release, according to the time information of the implicit resource releasing timer, a common E-DCH resource occupied by a terminal.

Alternatively, in a possible implementation manner of this embodiment, the receiving unit 51 may specifically receive the time information of the implicit resource releasing timer sent by the base station controlling device through a physical shared channel reconfiguration request (physical shared channel reconfiguration request) message.

Alternatively, in a possible implementation manner of this embodiment, the time information of the implicit resource releasing timer received by the receiving unit 51 may be a value of the implicit resource releasing timer. For example, the receiving unit 51 may receive one of enumerated (Enumerated) values sent by the base station controlling device, and the Enumerated values are 10, 20, 30, 40, 80, 160, 320, and 800 milliseconds (ms).

Alternatively, in a possible implementation manner of this embodiment, the time information of the implicit resource releasing timer received by the receiving unit 51 may also be an indication used to indicate that the value of the implicit resource releasing timer is 0 or greater than 0. For example, 1 indicates that the value of the implicit resource releasing timer is 0, and 0 indicates that the value of the implicit resource releasing timer is greater than 0. For another example, a value True (True) indicates that the value of the implicit resource releasing timer is 0, and a value False (False) indicates that the value of the implicit resource releasing timer is greater than 0.

Alternatively, in a possible implementation manner of this embodiment, if the value indicated by the time information of the implicit resource releasing timer is 0, the executing unit 52 may specifically release the common E-DCH resource occupied by the terminal.

Alternatively, in a possible implementation manner of this embodiment, if the value indicated by the time information of the implicit resource releasing timer is greater than 0, the executing unit 52 may also specifically not release the common E-DCH resource occupied by the terminal.

Alternatively, in a possible implementation manner of this embodiment, the receiving unit 51 may further be configured to receive a MAC-I PDU sent by the terminal, where payload of the MAC-I PDU includes DCCH/DTCH data and SI that carries empty buffer status. The SI that carries empty buffer status, that is, SI = 0, indicates that there is no data to be sent in a buffer of the terminal. The buffer status is used to indicate the amount of data to be sent in the buffer of the terminal, and the empty is used to indicate that there is no data to be sent, except for that included in the last MAC-I PDU, in the buffer of the terminal. That there is no data to be sent in the buffer of the terminal means that Total E-DCH buffer status (Total E-DCH Buffer Status, TEBS) = 0 and there is no data to be sent at a MAC layer after the last MAC-I PDU that includes DCCH/DTCH data is sent, where the TEBS is used to indicate the number of bytes to be transmitted or retransmitted at a radio link control (Radio Link Control, RLC) layer.

Correspondingly, if the value indicated by the time information of the implicit resource releasing timer is greater than 0, the executing unit 52 may determine that the SI = 0 is not triggered by expiration of the implicit resource releasing timer but is triggered by another case. For example, it may be triggered by a mechanism for triggering periodical reporting of the SI or generated as trailing bits in the MAC-I PDU. Therefore, the executing unit 52 may not release the common E-DCH resource occupied by the terminal.

In this embodiment, the base station receives, through a receiving unit, time information of an implicit resource releasing timer sent by a base station controlling device, so that an executing unit releases or does not release, according to the time information of the implicit resource releasing timer, a common E-DCH resource occupied by a terminal. Because the base station no longer releases or does not release, only according to SI whose value is 0, the common E-DCH resource occupied by the terminal, a problem in the prior art that the terminal needs to compete again if there is data to be sent so as to obtain the common E-DCH resource because the base station improperly releases the E-DCH resource occupied by the terminal, can be avoided, thereby reducing delay in sending the data.

FIG. 6 is a schematic structural diagram of a base station controlling device according to another embodiment of the present invention. As shown in FIG. 6, the base station controlling device in this embodiment may include a determining unit 61 and a sending unit 62. The determining unit 61 is configured to determine time information of an implicit resource releasing timer and transmit the time information of the implicit resource releasing timer to the sending unit 62. The sending unit 62 is configured to send the time information of the implicit resource releasing timer to the base station, so that the base station releases or does not release, according to the time information of the implicit resource releasing timer, a common E-DCH resource occupied by a terminal.

Specifically, the determining unit 61 may determine the time information of the implicit resource releasing timer according to a service feature of the terminal in cell_forward link access channel (CELL_Forward Link Access Channel, CELL_FACH) state. For example, if the amount of service data of the terminal in CELL_FACH state is relatively large, the determining unit 61 may set a value of the implicit resource releasing timer to a relatively long time.

Specifically, the determining unit 61 may also determine the time information of the implicit resource releasing timer according to congestion status of the common E-DCH resource. For example, if the common E-DCH resource is in congestion state, the determining unit 61 may set the value of the implicit resource releasing timer to a relatively short time.

Alternatively, in a possible implementation manner of this embodiment, the time information of the implicit resource releasing timer determined by the determining unit 61 may be the value of the implicit resource releasing timer. For example, the determining unit 61 may determine one of enumerated (Enumerated) values, and the Enumerated values are 10, 20, 30, 40, 80, 160, 320, and 800 milliseconds (ms).

Alternatively, in a possible implementation manner of this embodiment, the time information of the implicit resource releasing timer determined by the determining unit 61 may also be an indication used to indicate that the value of the implicit resource releasing timer is 0 or greater than 0. For example, 1 indicates that the value of the implicit resource releasing timer is 0, and 0 indicates that the value of the implicit resource releasing timer is greater than 0. For another example, a value True (True) indicates that the value of the implicit resource releasing timer is 0, and a value False (False) indicates that the value of the implicit resource releasing timer is greater than 0.

Alternatively, in a possible implementation manner of this embodiment, the sending unit 62 may specifically send the time information of the implicit resource releasing timer to the base station through a physical shared channel reconfiguration request (PHYSICAL SHARED CHANNEL RECONFIGURATION REQUEST) message.

Alternatively, in a possible implementation manner of this embodiment, if the value indicated by the time information of the implicit resource releasing timer is 0, this instructs the base station to release the common E-DCH resource occupied by the terminal.

Alternatively, in a possible implementation manner of this embodiment, if the value indicated by the time information of the implicit resource releasing timer is greater than 0, this instructs the base station not to release the common E-DCH resource occupied by the terminal.

In this embodiment, the base station controlling device determines, through a determining unit, time information of an implicit resource releasing timer, so that a sending unit sends the time information of the implicit resource releasing timer to the base station, and the base station releases or does not release, according to the time information of the implicit resource releasing timer, a common E-DCH resource occupied by a terminal. Because the base station no longer releases, only according to SI whose value is 0, the common E-DCH resource occupied by the terminal, a problem in the prior art that the terminal needs to compete again if there is data to be sent so as to obtain the common E-DCH resource because the base station improperly releases the E-DCH resource occupied by the terminal, can be avoided, thereby reducing delay in sending the data.

FIG. 7 is a schematic structural diagram of a base station according to another embodiment of the present invention. As shown in FIG. 7, the base station in this embodiment may include a receiving unit 71 and an executing unit 72. The receiving unit 71 is configured to receive a MAC-I PDU sent by a terminal and transmit the MAC-I PDU to the executing unit 72, where the MAC-I PDU includes, in a first manner or a second manner, SI that carries empty buffer status, the first manner is that payload of the MAC-I PDU includes only the SI, and the second manner is that payload of the MAC-I PDU includes DCCH/DTCH data and the SI. The executing unit 72 is configured to release or not release, according to the manner in which the SI is included in the payload of the MAC-I PDU, a common E-DCH resource occupied by the terminal.

The SI that carries empty buffer status, that is, SI = 0, indicates that there is no data to be sent in a buffer of the terminal. The buffer status is used to indicate the amount of data to be sent in the buffer of the terminal, and the empty is used to indicate that there is no data to be sent, except for that included in the last MAC-I PDU, in the buffer of the terminal. That there is no data to be sent in the buffer of the terminal means that Total E-DCH buffer status (Total E-DCH Buffer Status, TEBS) = 0 and there is no data to be sent at a MAC layer after the last MAC-I PDU that includes DCCH/DTCH data is sent, where the TEBS is used to indicate the number of bytes to be transmitted or retransmitted at a radio link control (Radio Link Control, RLC) layer.

Alternatively, in a possible implementation manner of this embodiment, if the manner is the first manner, the executing unit 72 may specifically release the common E-DCH resource occupied by the terminal.

Alternatively, in a possible implementation manner of this embodiment, if the manner is the second manner, the executing unit 72 may also specifically not release the common E-DCH resource occupied by the terminal.

In this embodiment, the base station receives, through a receiving unit, a MAC-I PDU sent by a terminal, where the MAC-I PDU includes, in a first manner or a second manner, SI that carries empty buffer status, the first manner is that payload of the MAC-I PDU includes only the SI, and the second manner is that payload of the MAC-I PDU includes DCCH/DTCH data and the SI, so that an executing unit releases or does not release, according to the manner in which the SI is included in the payload of the MAC-I PDU, a common E-DCH resource occupied by the terminal. Because the base station no longer releases or does not release, only according to SI whose value is 0, the common E-DCH resource occupied by the terminal, a problem in the prior art that the terminal needs to compete again if there is data to be sent so as to obtain the common E-DCH resource because the base station improperly releases the E-DCH resource occupied by the terminal, can be avoided, thereby reducing delay in sending the data.

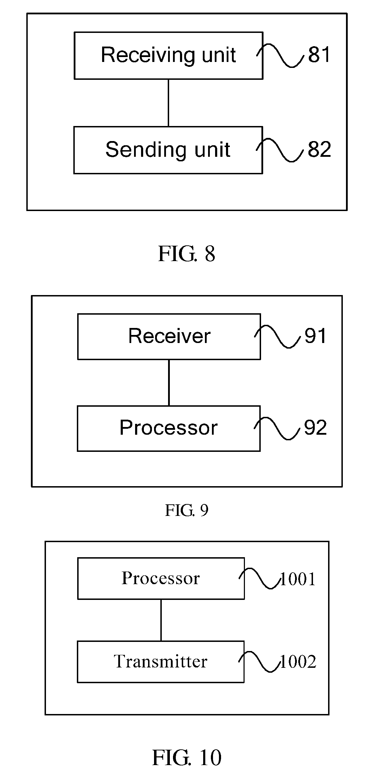

FIG. 8 is a schematic structural diagram of a terminal according to another embodiment of the present invention. As shown in FIG. 8, the terminal in this embodiment may include a receiving unit 81 and a sending unit 82. The receiving unit 81 is configured to receive a value of an implicit resource releasing timer and transmit the value of the implicit resource releasing timer to the sending unit 82, where the value is set by a base station controlling device. The sending unit 82 is configured to, if the value of the implicit resource releasing timer is 0 and there is no data to be sent in a buffer of the terminal, send a MAC-I PDU to a base station, where the MAC-I PDU includes, in a first manner, SI that carries empty buffer status, and the first manner is that payload of the MAC-I PDU includes only the SI, so that the base station releases or does not release, according to the manner in which the SI is included in the payload of the MAC-I PDU, a common E-DCH resource occupied by the terminal.

The SI that carries empty buffer status, that is, SI = 0, indicates that there is no data to be sent in the buffer of the terminal. The buffer status is used to indicate the amount of data to be sent in the buffer of the terminal, and the empty is used to indicate that there is no data to be sent, except for that included in the last MAC-I PDU, in the buffer of the terminal. That there is no data to be sent in the buffer of the terminal means that Total E-DCH buffer status (Total E-DCH Buffer Status, TEBS) = 0 and there is no data to be sent at a MAC layer after the last MAC-I PDU that includes DCCH/DTCH data is sent, where the TEBS is used to indicate the number of bytes to be transmitted or retransmitted at a radio link control (Radio Link Control, RLC) layer.

Alternatively, in a possible implementation manner of this embodiment, if the manner is the first manner, this instructs the base station to release the common E-DCH resource occupied by the terminal.

Alternatively, in a possible implementation manner of this embodiment, if the manner is the second manner, this instructs the base station not to release the common E-DCH resource occupied by the terminal.

Alternatively, in a possible implementation manner of this embodiment, if another MAC-I PDU that bears the DCCH/DTCH data includes a first free space, and a size of the first free space is larger than or equal to that of the SI, the sending unit 82 may specifically send the another MAC-I PDU to the base station, where payload of the another MAC-I PDU includes the DCCH/DTCH data and the SI, and send the MAC-I PDU to the base station.

Alternatively, in a possible implementation manner of this embodiment, if another MAC-I PDU that bears the DCCH/DTCH data does not include a free space or includes a second free space, and a size of the second free space is smaller than that of the SI, the sending unit 82 may also specifically send the another MAC-I PDU to the base station, where payload of the another MAC-I PDU includes the DCCH/DTCH data, and send the MAC-I PDU to the base station.

It should be noted that sufficient space in the another MAC-I PDU means that there is still sufficient space in the another MAC-I PDU to bear the SI other than the DCCH/DTCH data. For example, the SI occupies 18 bits (bit); in this case, sufficient space in the another MAC-I PDU may indicate that there is at least an 18-bit remaining space in the another MAC-I PDU other than a space for bearing the DCCH/DTCH data.

Alternatively, in a possible implementation manner of this embodiment, if the value of the implicit resource releasing timer is not 0, there is no data to be sent in the buffer of the terminal, and the implicit resource timer is operating, the sending unit 82 may further be configured to not send the MAC-I PDU to the base station.

Further alternatively, if the value of the implicit resource releasing timer is not 0, there is no data to be sent in the buffer of the terminal, and the implicit resource timer expires, the sending unit 82 may further be configured to send the MAC-I PDU to the base station.

In this embodiment, the terminal receives, through a receiving unit, a value of an implicit resource releasing timer, where the value is set by a base station controlling device, and if the value of the implicit resource releasing timer is 0 and there is no data to be sent in a buffer of the terminal, a sending unit sends a MAC-I PDU to a base station, where the MAC-I PDU includes, in a first manner, SI that carries empty buffer status and the first manner is that payload of the MAC-I PDU includes only the SI, so that the base station releases or does not release, according to the manner in which the SI is included in the payload of the MAC-I PDU, a common E-DCH resource occupied by the terminal. Because the base station no longer releases or does not release, only according to SI whose value is 0, the common E-DCH resource occupied by the terminal, a problem in the prior art that the terminal needs to compete again if there is data to be sent so as to obtain the common E-DCH resource because the base station improperly releases the E-DCH resource occupied by the terminal, can be avoided, thereby reducing delay in sending the data.

FIG. 9 is a schematic structural diagram of a base station according to another embodiment of the present invention. As shown in FIG. 9, the base station in this embodiment may include a receiver 91 and a processor 92. The receiver 91 is configured to receive time information of an implicit resource releasing timer sent by a base station controlling device and transmit the time information of the implicit resource releasing timer to the processor 92. The processor 92 is configured to release or not release, according to the time information of the implicit resource releasing timer, a common E-DCH resource occupied by a terminal.

Alternatively, in a possible implementation manner of this embodiment, the receiver 91 may specifically receive the time information of the implicit resource releasing timer sent by the base station controlling device through a physical shared channel reconfiguration request (PHYSICAL SHARED CHANNEL RECONFIGURATION REQUEST) message.

Alternatively, in a possible implementation manner of this embodiment, the time information of the implicit resource releasing timer received by the receiver 91 may be a value of the implicit resource releasing timer. For example, the receiver 91 may receive one of enumerated (Enumerated) values sent by the base station controlling device, and the Enumerated values are 10, 20, 30, 40, 80, 160, 320, and 800 milliseconds (ms).

Alternatively, in a possible implementation manner of this embodiment, the time information of the implicit resource releasing timer received by the receiver 91 may also be an indication used to indicate that the value of the implicit resource releasing timer is 0 or greater than 0. For example, 1 indicates that the value of the implicit resource releasing timer is 0, and 0 indicates that the value of the implicit resource releasing timer is greater than 0. For another example, a value True (True) indicates that the value of the implicit resource releasing timer is 0, and a value False (False) indicates that the value of the implicit resource releasing timer is greater than 0.

Alternatively, in a possible implementation manner of this embodiment, if the value indicated by the time information of the implicit resource releasing timer is 0, the processor 92 may specifically release the common E-DCH resource occupied by the terminal.

Alternatively, in a possible implementation manner of this embodiment, if the value indicated by the time information of the implicit resource releasing timer is greater than 0, the processor 92 may also specifically not release the common E-DCH resource occupied by the terminal.

Alternatively, in a possible implementation manner of this embodiment, the receiver 91 may further be configured to receive a MAC-I PDU sent by the terminal, where payload of the MAC-I PDU includes DCCH/DTCH data and SI that carries empty buffer status. The SI that carries empty buffer status, that is, SI = 0, indicates that there is no data to be sent in the buffer of the terminal. The buffer status is used to indicate the amount of data to be sent in the buffer of the terminal, and the empty is used to indicate that there is no data to be sent, except for that included in the last MAC-I PDU, in the buffer of the terminal. That there is no data to be sent in the buffer of the terminal means that Total E-DCH buffer status (Total E-DCH Buffer Status, TEBS) = 0 and there is no data to be sent at a MAC layer after the last MAC-I PDU that includes DCCH/DTCH data is sent, where the TEBS is used to indicate the number of bytes to be transmitted or retransmitted at a radio link control (Radio Link Control, RLC) layer.

Correspondingly, if the value indicated by the time information of the implicit resource releasing timer is greater than 0, the processor 92 may determine that the SI = 0 is not triggered by expiration of the implicit resource releasing timer but is triggered by another case. For example, it may be triggered by a mechanism for triggering periodical reporting of the SI or generated as trailing bits in the MAC-I PDU. Therefore, the processor 92 may not release the common E-DCH resource occupied by the terminal.

In this embodiment, the base station receives, through a receiver, time information of an implicit resource releasing timer sent by a base station controlling device, so that a processor releases or does not release, according to the time information of the implicit resource releasing timer, a common E-DCH resource occupied by a terminal. Because the base station no longer releases or does not release, only according to SI whose value is 0, the common E-DCH resource occupied by the terminal, a problem in the prior art that the terminal needs to compete again if there is data to be sent so as to obtain the common E-DCH resource because the base station improperly releases the E-DCH resource occupied by the terminal, can be avoided, thereby reducing delay in sending the data.

FIG. 10 is a schematic structural diagram of a base station controlling device according to another embodiment of the present invention. As shown in FIG. 10, the base station controlling device in this embodiment may include a processor 1001 and a transmitter 1002. The processor 1001 is configured to determine time information of an implicit resource releasing timer and transmit the time information of the implicit resource releasing timer to the transmitter 1002. The transmitter 1002 is configured to send the time information of the implicit resource releasing timer to the base station, so that the base station releases or does not release, according to the time information of the implicit resource releasing timer, a common E-DCH resource occupied by a terminal.

Specifically, the processor 1001 may determine the time information of the implicit resource releasing timer according to a service feature of the terminal in cell_forward link access channel (CELL_Forward Link Access Channel, CELL_FACH) state. For example, if the amount of service data of the terminal in CELL_FACH state is relatively large, the processor 1001 may set a value of the implicit resource releasing timer to a relatively long time.

Specifically, the processor 1001 may also determine the time information of the implicit resource releasing timer according to congestion status of the common E-DCH resource. For example, if the common E-DCH resource is in congestion state, the processor 1001 may set the value of the implicit resource releasing timer to a relatively short time.

Alternatively, in a possible implementation manner of this embodiment, the time information of the implicit resource releasing timer determined by the processor 1001 may be the value of the implicit resource releasing timer. For example, the processor 1001 may determine one of enumerated (Enumerated) values, and the Enumerated values are 10, 20, 30, 40, 80, 160, 320, and 800 milliseconds (ms).

Alternatively, in a possible implementation manner of this embodiment, the time information of the implicit resource releasing timer determined by the processor 1001 may also be an indication used to indicate that the value of the implicit resource releasing timer is 0 or greater than 0. For example, 1 indicates that the value of the implicit resource releasing timer is 0, and 0 indicates that the value of the implicit resource releasing timer is greater than 0. For another example, a value True (True) indicates that the value of the implicit resource releasing timer is 0, and a value False (False) indicates that the value of the implicit resource releasing timer is greater than 0.

Alternatively, in a possible implementation manner of this embodiment, the transmitter 1002 may specifically send the time information of the implicit resource releasing timer to the base station through a physical shared channel reconfiguration request (PHYSICAL SHARED CHANNEL RECONFIGURATION REQUEST) message.

Alternatively, in a possible implementation manner of this embodiment, if the value indicated by the time information of the implicit resource releasing timer is 0, this instructs the base station to release the common E-DCH resource occupied by the terminal.

Alternatively, in a possible implementation manner of this embodiment, if the value indicated by the time information of the implicit resource releasing timer is greater than 0, this instructs the base station not to release the common E-DCH resource occupied by the terminal.

In this embodiment, the base station controlling device determines, through a processor, time information of an implicit resource releasing timer, so that a transmitter sends the time information of the implicit resource releasing timer to the base station, and the base station releases or does not release, according to the time information of the implicit resource releasing timer, a common E-DCH resource occupied by a terminal. Because the base station no longer releases, only according to SI whose value is 0, the common E-DCH resource occupied by the terminal, a problem in the prior art that the terminal needs to compete again if there is data to be sent so as to obtain the common E-DCH resource because the base station improperly releases the E-DCH resource occupied by the terminal, can be avoided, thereby reducing delay in sending the data.

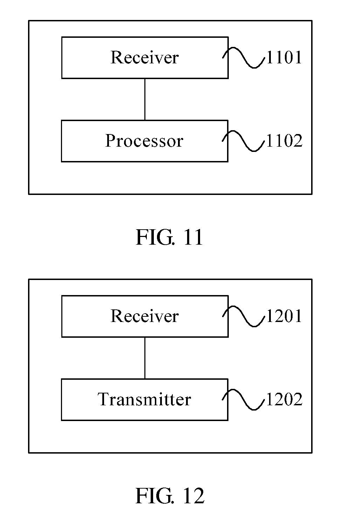

FIG. 11 is a schematic structural diagram of a base station according to another embodiment of the present invention. As shown in FIG. 11, the base station in this embodiment may include a receiver 1101 and a processor 1102. The receiver 1101 is configured to receive a MAC-I PDU sent by a terminal and transmit the MAC-I PDU to the processor 1102, where the MAC-I PDU includes, in a first manner or a second manner, SI that carries empty buffer status, the first manner is that payload of the MAC-I PDU includes only the SI, and the second manner is that payload of the MAC-I PDU includes DCCH/DTCH data and the SI. The processor 1102 is configured to release or not release, according to the manner in which the SI is included in the payload of the MAC-I PDU, a common E-DCH resource occupied by the terminal.

The SI that carries empty buffer status, that is, SI = 0, indicates that there is no data to be sent in the buffer of the terminal. The buffer status is used to indicate the amount of data to be sent in the buffer of the terminal, and the empty is used to indicate that there is no data to be sent, except for that included in the last MAC-I PDU, in the buffer of the terminal. That there is no data to be sent in the buffer of the terminal means that Total E-DCH buffer status (Total E-DCH Buffer Status, TEBS) = 0 and there is no data to be sent at a MAC layer after the last MAC-I PDU that includes DCCH/DTCH data is sent, where the TEBS is used to indicate the number of bytes to be transmitted or retransmitted at a radio link control (Radio Link Control, RLC) layer.

Alternatively, in a possible implementation manner of this embodiment, if the manner is the first manner, the processor 1102 may specifically release the common E-DCH resource occupied by the terminal.

Alternatively, in a possible implementation manner of this embodiment, if the manner is the second manner, the processor 1102 may also specifically not release the common E-DCH resource occupied by the terminal.

In this embodiment, the base station receives, through a receiver, a MAC-I PDU sent by a terminal, where the MAC-I PDU includes, in a first manner or a second manner, SI that carries empty buffer status, the first manner is that payload of the MAC-I PDU includes only the SI, and the second manner is that payload of the MAC-I PDU includes DCCH/DTCH data and the SI, so that a processor releases or does not release, according to the manner in which the SI is included in the payload of the MAC-I PDU, a common E-DCH resource occupied by the terminal. Because the base station no longer releases or does not release, only according to SI whose value is 0, the common E-DCH resource occupied by the terminal, a problem in the prior art that the terminal needs to compete again if there is data to be sent so as to obtain the common E-DCH resource because the base station improperly releases the E-DCH resource occupied by the terminal, can be avoided, thereby reducing delay in sending the data.

FIG. 12 is a schematic structural diagram of a terminal according to another embodiment of the present invention. As shown in FIG. 12, the terminal in this embodiment may include a receiver 1201 and a transmitter 1202. The receiver 1201 is configured to receive a value of an implicit resource releasing timer and transmit the value of the implicit resource releasing timer to the transmitter 1202, where the value is set by a base station controlling device. The transmitter 1202 is configured to, if the value of the implicit resource releasing timer is 0 and there is no data to be sent in a buffer of the terminal, send a MAC-I PDU to a base station, where the MAC-I PDU includes, in a first manner, SI that carries empty buffer status, and the first manner is that payload of the MAC-I PDU includes only the SI, so that the base station releases or does not release, according to the manner in which the SI is included in the payload of the MAC-I PDU, a common E-DCH resource occupied by the terminal.

The SI that carries empty buffer status, that is, SI = 0, indicates that there is no data to be sent in the buffer of the terminal. The buffer status is used to indicate the amount of data to be sent in the buffer of the terminal, and the empty is used to indicate that there is no data to be sent, except for that included in the last MAC-I PDU, in the buffer of the terminal. That there is no data to be sent in the buffer of the terminal means that Total E-DCH buffer status (Total E-DCH Buffer Status, TEBS) = 0 and there is no data to be sent at a MAC layer after the last MAC-I PDU that includes DCCH/DTCH data is sent, where the TEBS is used to indicate the number of bytes to be transmitted or retransmitted at a radio link control (Radio Link Control, RLC) layer.

Alternatively, in a possible implementation manner of this embodiment, if the manner is the first manner, this instructs the base station to release the common E-DCH resource occupied by the terminal.

Alternatively, in a possible implementation manner of this embodiment, if the manner is the second manner, this instructs the base station not to release the common E-DCH resource occupied by the terminal.

Alternatively, in a possible implementation manner of this embodiment, if another MAC-I PDU that bears the DCCH/DTCH data includes a first free space, and a size of the first free space is larger than or equal to that of the SI, the transmitter 1202 may specifically send the another MAC-I PDU to the base station, where payload of the another MAC-I PDU includes the DCCH/DTCH data and the SI, and send the MAC-I PDU to the base station.

Alternatively, in a possible implementation manner of this embodiment, if another MAC-I PDU that bears the DCCH/DTCH data does not include a free space or includes a second free space, and a size of the second free space is smaller than that of the SI, the transmitter 1202 may also specifically send the another MAC-I PDU to the base station, where payload of the another MAC-I PDU includes the DCCH/DTCH data; and send the MAC-I PDU to the base station.

It should be noted that sufficient space in the another MAC-I PDU means that there is still sufficient space in the another MAC-I PDU to bear the SI other than the DCCH/DTCH data. For example, the SI occupies 18 bits (bit); in this case, sufficient space in the another MAC-I PDU may indicate that there is at least an 18-bit remaining space in the another MAC-I PDU other than a space for bearing the DCCH/DTCH data.

Alternatively, in a possible implementation manner of this embodiment, if the value of the implicit resource releasing timer is not 0, there is no data to be sent in the buffer of the terminal, and the implicit resource timer is operating, the transmitter 1202 may further be configured to not send the MAC-I PDU to the base station.

Further alternatively, if the value of the implicit resource releasing timer is not 0, there is no data to be sent in the buffer of the terminal, and the implicit resource timer expires, the transmitter 1202 may further be configured to send the MAC-I PDU to the base station.

In this embodiment, the terminal receives, through a receiver, a value of an implicit resource releasing timer, where the value is set by a base station controlling device, and if the value of the implicit resource releasing timer is 0 and there is no data to be sent in a buffer of the terminal, a transmitter sends a MAC-I PDU to a base station, where the MAC-I PDU includes, in a first manner, SI that carries empty buffer status and the first manner is that payload of the MAC-I PDU includes only the SI, so that the base station releases or does not release, according to the manner in which the SI is included in the payload of the MAC-I PDU, a common E-DCH resource occupied by the terminal. Because the base station no longer releases or does not release, only according to SI whose value is 0, the common E-DCH resource occupied by the terminal, a problem in the prior art that the terminal needs to compete again if there is data to be sent so as to obtain the common E-DCH resource because the base station improperly releases the E-DCH resource occupied by the terminal, can be avoided, thereby reducing delay in sending the data.

It may be clearly understood by a person skilled in the art that, for the purpose of convenient and brief description, a detailed working process of the foregoing system, apparatus, and unit may refer to the corresponding process in the foregoing method embodiments, and the details are not described herein again.

In the several embodiments provided in the present invention, it should be understood that the disclosed system, apparatus, and method may be implemented in other manners. For example, the described apparatus embodiment is merely exemplary. For example, the unit division is merely logical function division and may be other division in actual implementation. For example, multiple units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on multiple network units. A part or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented through hardware, or may also be implemented in a form of hardware plus a software functional module.

The integrated unit implemented in a form of software functional unit may be stored in a computer readable storage medium. The foregoing software functional unit is stored in a storage medium, and includes several instructions for instructing a computer device (which may be a personal computer, a server, or a network equipment) or processor (processor) to perform a part of the steps of the methods described in the embodiments of the present invention. The foregoing storage medium includes: any medium that can store program codes, such as a USB flash disk, a removable hard disk, a read-only memory (Read-Only Memory, ROM), a random access memory (Random Access Memory, RAM), a magnetic disk, or an optical disc.

Finally, it should be noted that the foregoing embodiments are merely intended for describing the technical solutions of the present invention other than limiting the present invention. Although the present invention is described in detail with reference to the foregoing embodiments, a person of ordinary skill in the art should understand that he may still make modifications to the technical solutions described in the foregoing embodiments, or make equivalent replacements to some technical features thereof, without departing from the spirit and scope of the technical solutions of the embodiments of the present invention.

## Claims

1. A method for releasing a common enhanced dedicated channel (E-DCH) resource, comprising:
receiving, by a base station, time information of an implicit resource releasing timer sent by a base station controlling device; and
releasing or not releasing, by the base station according to the time information of the implicit resource releasing timer, a common E-DCH resource occupied by a terminal.

2. The method according to claim 1, wherein the time information of the implicit resource releasing timer comprises:
a value of the implicit resource releasing timer; or
an indication used to indicate that the value of the implicit resource releasing timer is 0 or greater than 0.

3. The method according to claim 1 or 2, wherein the releasing or not releasing, by the base station according to the time information of the implicit resource releasing timer, the common E-DCH resource occupied by a terminal comprises one of:
if a value indicated by the time information of the implicit resource releasing timer is 0, releasing, by the base station, the common E-DCH resource occupied by the terminal; and
if a value indicated by the time information of the implicit resource releasing timer is greater than 0, not releasing, by the base station, the common E-DCH resource occupied by the terminal.

4. The method according to any one of claims 1 to 3, before the releasing or not releasing, by the base station according to the time information of the implicit resource releasing timer, the common E-DCH resource occupied by a terminal, further comprising:
receiving, by the base station, a media access control (MAC)-I protocol data unit (PDU) sent by the terminal, wherein payload of the MAC-I PDU comprises dedicated control channel (DCCH)/dedicated traffic channel (DTCH) data and SI that carries empty buffer status.

5. A method for releasing a common enhanced dedicated channel (E-DCH) resource, comprising:
determining, by a base station controlling device, time information of an implicit resource releasing timer; and
sending, by the base station controlling device, the time information of the implicit resource releasing timer to the base station, so that the base station releases or does not release, according to the time information of the implicit resource releasing timer, a common E-DCH resource occupied by a terminal.

6. The method according to claim 5, wherein the time information of the implicit resource releasing timer comprises one of:
a value of the implicit resource releasing timer; and
an indication used to indicate that the value of the implicit resource releasing timer is 0 or greater than 0.

7. The method according to claim 5 or 6, wherein:
if a value indicated by the time information of the implicit resource releasing timer is 0, this instructs the base station to release the common E-DCH resource occupied by the terminal; or
if a value indicated by the time information of the implicit resource releasing timer is greater than 0, this instructs the base station not to release the common E-DCH resource occupied by the terminal.

8. A method for releasing a common enhanced dedicated channel (E-DCH) resource, comprising:
receiving, by a base station, a media access control (MAC)-I protocol data unit (PDU) sent by a terminal, wherein the MAC-I PDU comprises, in a first manner or a second manner, SI that carries empty buffer status, the first manner is that payload of the MAC-I PDU comprises only the SI, and the second manner is that payload of the MAC-I PDU comprises dedicated control channel (DCCH)/dedicated traffic channel (DTCH) data and the SI; and
releasing or not releasing, by the base station according to the manner in which the SI is comprised in the payload of the MAC-I PDU, a common E-DCH resource occupied by the terminal.

9. The method according to claim 8, wherein the releasing or not releasing, by the base station according to the manner in which the SI is comprised in the payload of the MAC-I PDU, the common E-DCH resource occupied by the terminal comprises one of:
if the manner is the first manner, releasing, by the base station, the common E-DCH resource occupied by the terminal; and
if the manner is the second manner, not releasing, by the base station, the common E-DCH resource occupied by the terminal.

10. A method for releasing a common enhanced dedicated channel (E-DCH) resource, comprising:
receiving, by a terminal, a value of an implicit resource releasing timer, wherein the value is set by a base station controlling device; and
if the value of the implicit resource releasing timer is 0 and there is no data to be sent in a buffer of the terminal, sending, by the terminal, a media access control (MAC)-I protocol data unit (PDU), wherein the MAC-I PDU comprises, in a first manner, SI that carries empty buffer status, and the first manner is that payload of the MAC-I PDU comprises only the SI, to a base station, so that the base station releases or does not release, according to the manner in which the SI is comprised in the payload of the MAC-I PDU, a common E-DCH resource occupied by the terminal.

11. The method according to claim 10, wherein the sending, by the terminal, the MAC-I PDU to the base station, wherein the MAC-I PDU comprises, in the first manner, SI that carries the empty buffer status, comprises one of:
if another MAC-I PDU that bears dedicated control channel (DCCH)/dedicated traffic channel (DTCH) data comprises a first free space, and a size of the first free space is larger than or equal to that of the SI, sending, by the terminal, the another MAC-I PDU to the base station, wherein payload of the another MAC-I PDU comprises the DCCH/DTCH data and the SI; and sending the MAC-I PDU to the base station; and
if another MAC-I PDU that bears DCCH/DTCH data does not comprise a free space or comprises a second free space, and a size of the second free space is smaller than that of the SI, sending, by the terminal, the another MAC-I PDU to the base station, wherein payload of the another MAC-I PDU comprises the DCCH/DTCH data; and sending the MAC-I PDU to the base station.

12. The method according to claim 10 or 11, further comprising:
if the value of the implicit resource releasing timer is not 0, there is no data to be sent in the buffer of the terminal, and the implicit resource timer is operating, not sending, by the terminal, the MAC-I PDU to the base station.

13. The method according to claim 10 or 11, further comprising:
if the value of the implicit resource releasing timer is not 0, there is no data to be sent in the buffer of the terminal, and the implicit resource timer expires, sending, by the terminal, the MAC-I PDU to the base station.

14. The method according to any one of claims 10 to 13, wherein:
if the manner is the first manner, this instructs the base station to release the common E-DCH resource occupied by the terminal; or
if the manner is the second manner, this instructs the base station not to release the common E-DCH resource occupied by the terminal.

15. A base station, comprising:
a receiving unit, configured to receive time information of an implicit resource releasing timer sent by a base station controlling device and transmit the time information of the implicit resource releasing timer to an executing unit; and
the executing unit, configured to release or not release, according to the time information of the implicit resource releasing timer, a common enhanced dedicated channel (E-DCH) resource occupied by a terminal.

16. The base station according to claim 15, wherein the time information of the implicit resource releasing timer received by the receiving unit comprises:
a value of the implicit resource releasing timer; or
an indication used to indicate that the value of the implicit resource releasing timer is 0 or greater than 0.

17. The base station according to claim 15 or 16, wherein the executing unit is specifically configured to:
if a value indicated by the time information of the implicit resource releasing timer is 0, release the common E-DCH resource occupied by the terminal; or
if a value indicated by the time information of the implicit resource releasing timer is greater than 0, not release the common E-DCH resource occupied by the terminal.

18. The base station according to any one of claims 15 to 17, wherein the receiving unit is further configured to:
receive a media access control (MAC)-I protocol data unit (PDU) sent by the terminal, wherein payload of the MAC-I PDU comprises dedicated control channel (DCCH)/dedicated traffic channel (DTCH) data and SI that carries empty buffer status.

19. A base station controlling device, comprising:
a determining unit, configured to determine time information of an implicit resource releasing timer and transmit the time information of the implicit resource releasing timer to a sending unit; and
the sending unit, configured to send the time information of the implicit resource releasing timer to the base station, so that the base station releases or does not release, according to the time information of the implicit resource releasing timer, a common enhanced dedicated channel (E-DCH) resource occupied by a terminal.

20. The base station controlling device according to claim 19, wherein the time information of the implicit resource releasing timer determined by the determining unit comprises:
a value of the implicit resource releasing timer; or
an indication used to indicate that the value of the implicit resource releasing timer is 0 or greater than 0.

21. The base station controlling device according to claim 19 or 20, wherein:
if a value indicated by the time information of the implicit resource releasing timer is 0, this instructs the base station to release the common E-DCH resource occupied by the terminal; or
if a value indicated by the time information of the implicit resource releasing timer is greater than 0, this instructs the base station not to release the common E-DCH resource occupied by the terminal.

22. A base station, comprising:
a receiving unit, configured to receive a media access control (MAC)-I protocol data unit (PDU) sent by a terminal and transmit the MAC-I PDU to an executing unit, wherein the MAC-I PDU comprises, in a first manner or a second manner, SI that carries empty buffer status, the first manner is that payload of the MAC-I PDU comprises only the SI, and the second manner is that payload of the MAC-I PDU comprises dedicated control channel (DCCH)/dedicated traffic channel (DTCH) data and the SI; and
the executing unit, configured to release or not release, according to the manner in which the SI is comprised in the payload of the MAC-I PDU, a common enhanced dedicated channel (E-DCH) resource occupied by the terminal.

23. The base station according to claim 22, wherein the executing unit is specifically configured to:
if the manner is the first manner, release the common E-DCH resource occupied by the terminal; or
if the manner is the second manner, not release the common E-DCH resource occupied by the terminal.

24. A terminal, comprising:
a receiving unit, configured to receive a value of an implicit resource releasing timer and transmit the value of the implicit resource releasing timer to a sending unit, wherein the value is set by a base station controlling device; and
the sending unit, configured to, if the value of the implicit resource releasing timer is 0 and there is no data to be sent in a buffer of the terminal, send a media access control (MAC)-I protocol data unit (PDU) to a base station, wherein the MAC-I PDU comprises, in a first manner, SI that carries empty buffer status, and the first manner is that payload of the MAC-I PDU comprises only the SI, so that the base station releases or does not release, according to the manner in which the SI is comprised in the payload of the MAC-I PDU, a common enhanced dedicated channel (E-DCH) resource occupied by the terminal.

25. The terminal according to claim 24, wherein the sending unit is specifically configured to:
if another MAC-I PDU that bears dedicated control channel (DCCH)/dedicated traffic channel (DTCH) data comprises a first free space, and a size of the first free space is larger than or equal to that of the SI, send the another MAC-I PDU to the base station, wherein payload of the another MAC-I PDU comprises the DCCH/DTCH data and the SI; and send the MAC-I PDU to the base station; or
if another MAC-I PDU that bears DCCH/DTCH data does not comprise a free space or comprises a second free space, and a size of the second free space is smaller than that of the SI, send the another MAC-I PDU to the base station, wherein payload of the another MAC-I PDU comprises the DCCH/DTCH data; and send the MAC-I PDU to the base station.

26. The terminal according to claim 24 or 25, wherein the sending unit is further configured to:
if the value of the implicit resource releasing timer is not 0, there is no data to be sent in the buffer of the terminal, and the implicit resource timer is operating, not send the MAC-I PDU to the base station.

27. The terminal according to claim 24 or 25, wherein the sending unit is further configured to:
if the value of the implicit resource releasing timer is not 0, there is no data to be sent in the buffer of the terminal, and the implicit resource timer expires, send the MAC-I PDU to the base station.

28. The terminal according to any one of claims 24 to 27, wherein:
if the manner is the first manner, this instructs the base station to release the common E-DCH resource occupied by the terminal; or
if the manner is the second manner, this instructs the base station not to release the common E-DCH resource occupied by the terminal.

29. A base station, comprising:
a receiver, configured to receive time information of an implicit resource releasing timer sent by a base station controlling device and transmit the time information of the implicit resource releasing timer to a processor; and
the processor, configured to release or not release, according to the time information of the implicit resource releasing timer, a common enhanced dedicated channel (E-DCH) resource occupied by a terminal.

30. The base station according to claim 29, wherein the time information of the implicit resource releasing timer received by the receiver comprises:
a value of the implicit resource releasing timer; or
an indication used to indicate that the value of the implicit resource releasing timer is 0 or greater than 0.

31. The base station according to claim 29 or 30, wherein the processor is specifically configured to:
if a value indicated by the time information of the implicit resource releasing timer is 0, release the common E-DCH resource occupied by the terminal; or
if a value indicated by the time information of the implicit resource releasing timer is greater than 0, not release the common E-DCH resource occupied by the terminal.

32. The base station according to any one of claims 29 to 31, wherein the receiver is further configured to receive a media access control (MAC)-I protocol data unit (PDU) sent by the terminal, wherein payload of the MAC-I PDU comprises dedicated control channel (DCCH)/dedicated traffic channel (DTCH) data and SI that carries empty buffer status.

33. A base station controlling device, comprising:
a processor, configured to determine time information of an implicit resource releasing timer and transmit the time information of the implicit resource releasing timer to a transmitter; and
the transmitter, configured to send the time information of the implicit resource releasing timer to the base station, so that the base station releases or does not release, according to the time information of the implicit resource releasing timer, a common enhanced dedicated channel (E-DCH) resource occupied by a terminal.

34. The base station controlling device according to claim 33, wherein the time information of the implicit resource releasing timer determined by the processor comprises:
a value of the implicit resource releasing timer; or
an indication used to indicate that the value of the implicit resource releasing timer is 0 or greater than 0.

35. The base station controlling device according to claim 33 or 34, wherein:
if a value indicated by the time information of the implicit resource releasing timer is 0, which presents the base station to release the common E-DCH resource occupied by the terminal; or
if a value indicated by the time information of the implicit resource releasing timer is greater than 0, which presents the base station not to release the common E-DCH resource occupied by the terminal.

36. A base station, comprising:
a receiver, configured to receive a media access control (MAC)-I protocol data unit (PDU) sent by a terminal and transmit the MAC-I PDU to a processor, wherein the MAC-I PDU comprises, in a first manner or a second manner, SI that carries empty buffer status, the first manner is that payload of the MAC-I PDU comprises only the SI, and the second manner is that payload of the MAC-I PDU comprises dedicated control channel (DCCH)/dedicated traffic channel (DTCH) data and the SI; and
the processor, configured to release or not release, according to the manner in which the SI is comprised in the payload of the MAC-I PDU, a common enhanced dedicated channel (E-DCH) resource occupied by the terminal.

37. The base station according to claim 36, wherein the processor is specifically configured to:
if the manner is the first manner, release the common E-DCH resource occupied by the terminal; or
if the manner is the second manner, not release the common E-DCH resource occupied by the terminal.

38. A terminal, comprising:
a receiver, configured to receive a value of an implicit resource releasing timer and transmit the value of the implicit resource releasing timer to a transmitter, wherein the value is set by a base station controlling device; and
the transmitter, configured to, if the value of the implicit resource releasing timer is 0 and there is no data to be sent in a buffer of the terminal, send a media access control (MAC)-I protocol data unit (PDU), wherein the MAC-I PDU comprises, in a first manner, SI that carries empty buffer status, and the first manner is that payload of the MAC-I PDU comprises only the SI, to a base station, so that the base station releases or does not release, according to the manner in which the SI is comprised in the payload of the MAC-I PDU, a common enhanced dedicated channel (E-DCH) resource occupied by the terminal.

39. The terminal according to claim 38, wherein the transmitter is specifically configured to:
if another MAC-I PDU that bears dedicated control channel (DCCH)/dedicated traffic channel (DTCH) data comprises a first free space, and a size of the first free space is larger than or equal to that of the SI, send the another MAC-I PDU to the base station, wherein payload of the another MAC-I PDU comprises the DCCH/DTCH data and the SI; and send the MAC-I PDU to the base station; or
if another MAC-I PDU that bears DCCH/DTCH data does not comprise a free space or comprises a second free space, and a size of the second free space is smaller than that of the SI, send the another MAC-I PDU to the base station, wherein payload of the another MAC-I PDU comprises the DCCH/DTCH data; and send the MAC-I PDU to the base station.

40. The terminal according to claim 38 or 39, wherein the transmitter is further configured to, if the value of the implicit resource releasing timer is not 0, there is no data to be sent in the buffer of the terminal, and the implicit resource timer is operating, not send the MAC-I PDU to the base station.

41. The terminal according to claim 38 or 39, wherein the transmitter is further configured to, if the value of the implicit resource releasing timer is not 0, there is no data to be sent in the buffer of the terminal, and the implicit resource timer expires, send the MAC-I PDU to the base station.

42. The terminal according to any one of claims 38 to 41, wherein:
if the manner is the first manner, this instructs the base station to release the common E-DCH resource occupied by the terminal; or
if the manner is the second manner, this instructs the base station not to release the common E-DCH resource occupied by the terminal.
